# EUROPEAN PATENT APPLICATION

(11) **EP 1 418 037 A1**
(43) Date of publication of application: **12.05.2004**
(21) Application number: 02760619.3
(22) Date of filing: 13.08.2002
(51) Int. Cl.: B29C 45/46

(54) **INJECTION DEVICE AND INJECTION METHOD**

(30) Priority: 17.08.2001 JP 2001248078; 07.09.2001 JP 2001271420; 07.09.2001 JP 2001271421; 17.09.2001 JP 2001281555
(71) Applicant: Sumitomo Heavy Industries, Ltd., Shinagawa-ku, Tokyo 141-8686 (JP)
(72) Inventor: KUZUMI, Shunshi, Chiba-shi, Chiba 263-0004 (JP); KONNO, Takeshi, Chiba-shi, Chiba 263-0004 (JP)
(74) Representative: Emde, Eric
(86) International application number: PCT/JP2002/008247
(87) International publication number: WO 2003/016021

(57) **Abstract**

An object of the present invention is to provide an injection apparatus capable of enhancing efficiency, reducing size, and enhancing durability of an injection member. The injection apparatus includes an injection member disposed reciprocatably in a cylinder member, a linear motor device (49) for advancing the injection member when operated, a metering member disposed rotatably in the cylinder member, and metering drive means for rotating the metering member. In this case, in an injection step, the linear motor device (49), when operated, can directly advance the injection member to thereby perform injection; therefore, occurrence of energy loss can be prevented. As a result, the efficiency of the injection apparatus (43) can be enhanced.

## Description

### TECHNICAL FIELD

The present invention relates to an injection apparatus and an injection method.

### BACKGROUND ART

Conventionally, a molding machine; for example, an injection-molding machine, functions in the following manner: resin that is melted in a heating cylinder through application of heat is injected under high pressure into a cavity of a mold apparatus so as to fill the cavity, the injected resin is cooled and solidified in the cavity, and the thus-molded article is ejected from the cavity.

The injection-molding machine is composed of a mold apparatus, a mold-clamping apparatus, and an injection apparatus. The mold apparatus includes a stationary mold and a movable mold. The mold-clamping apparatus includes a stationary platen, a movable platen, a mold-clamping motor, and other members and functions such that the mold-clamping motor, when operated, causes the movable platen to move toward and away from the stationary platen, thereby causing the mold apparatus to undergo mold closing, mold clamping, and mold opening.

The injection apparatus includes a heating cylinder for melting resin fed from a hopper through application of heat, an injection nozzle for injecting the molten resin, and other members and is configured such that a screw, which serves as an injection member, is disposed in the heating cylinder in a reciprocative and rotatable condition. In an injection step, an injection motor is operated to thereby generate torque, and moving-direction conversion means such as a ball screw converts rotary motion to linear motion to thereby advance the screw, whereby the resin is injected from the injection nozzle. In a metering step, a metering motor is operated so as to rotate the screw, whereby the screw is retreated for metering resin.

Since rotary motion is converted to linear motion by use of the moving-direction conversion means, energy loss arises in the process of converting the rotary motion to the linear motion, resulting in impaired efficiency of the injection apparatus.

Additionally, since the moving-direction conversion means such as a ball screw serves as a speed-reducing mechanism, a large thrust force can be obtained from a small torque, but response is impaired.

Furthermore, since the moving-direction conversion means such as a ball screw is disposed between a motor, which serves as a drive unit, and a screw, which serves as a driven member, backlash or the like arises, thereby impairing the stop position accuracy of the screw that serves as a driven member.

Thus, there is provided an injection apparatus configured such that a linear motor apparatus, which serves as a drive unit for carrying out injection, is disposed at the rear end of a heating cylinder, so as to advance a screw through operation of the linear motor apparatus. In this case, the screw and a linear motor of the linear motor apparatus are directly connected, so that the linear motor, when operated, can directly advance the screw.

However, in the thus-configured injection apparatus, since rotation that is generated in a metering step through operation of a metering motor must be transmitted to the screw, a predetermined rotation transmission system must be formed between the metering motor and the screw. When the screw is advanced through operation of the linear motor apparatus, the rotation transmission system is also advanced/retreated. Therefore, the weight of movable members including the screw increases, thereby impairing response of the injection apparatus.

The linear motor apparatus used as an injection drive unit exhibits improved response as compared with a rotational motor. However, since a thrust force that is generated through operation of the linear motor apparatus is small, injection pressure that is generated when the thrust force causes the screw to advance is low. In order to cope with the problem, the capacity of the linear motor may be increased. However, since increasing the capacity of the linear motor involves a corresponding increase in the size of the injection apparatus, the weight of a movable element increases, resulting in impaired response.

In order to increase injection pressure, the diameter of the screw may be reduced. However, reducing the diameter of the screw involves a corresponding drop in durability of the screw as well as impairment in plasticizing capability, metering stability, and the like.

An object of the present invention is to solve the above-mentioned problems in the conventional injection apparatus and to provide an injection apparatus and injection method capable of enhancing efficiency, reducing size, and enhancing durability of an injection member.

### DISCLOSURE OF THE INVENTION

To achieve the above object, an injection apparatus of the present invention comprises an injection member disposed reciprocatably in a cylinder member, a linear motor device for advancing the injection member when operated, a metering member disposed rotatably in the cylinder member, and metering drive means for rotating the metering member.

In this case, in an injection step, the linear motor device, when operated, can directly advance the injection member to thereby perform injection; thus, employment of an injection motor is unnecessary. Therefore, the injection member can be advanced without the need to convert rotary motion to linear motion by means of moving-direction conversion means such as a ball screw, thereby preventing occurrence of energy loss. As a result, the efficiency of the injection apparatus can be enhanced.

In a metering step, since the injection member and the metering member are disposed independently of each other, transmission of rotation from the metering drive means to the metering member does not require a rotation transmission system, which would otherwise be formed between the metering drive means and the injection member. Therefore, a structure between the injection member and the linear motor device can be simplified, whereby the weight of movable members connected to the injection member, the linear motor device, and other members can be reduced, thereby enhancing response of the injection apparatus.

A thrust force that is generated through operation of the linear motor device is small; however, by means of reducing the diameter of the injection member, injection pressure can be increased. Further, since there is no need to form a flight, a groove, or the like on the injection member, the durability of the injection member can be enhanced.

Further, since the injection member and the metering member are disposed independently of each other, the plasticizing capability of the metering member can be selected freely and independently of the durability of the injection member, whereby sufficient metering stability can be secured. Since moving-direction conversion means such as a ball screw is not employed, no backlash is involved, and hence the stop position accuracy of the injection member is enhanced. Since injection pressure can be sufficiently increased, there is no need to increase the capacity of a linear motor. Therefore, the size of the injection apparatus can be reduced.

In another injection apparatus of the present invention, the injection member and the metering member are disposed on different axes.

In yet another injection apparatus of the present invention, the injection member and the metering member are disposed on the same axis.

In this case, since the injection member and the metering member are disposed on the same axis, the size of the injection apparatus in the height direction can be reduced. Since the injection member and the metering member can be accommodated within the common cylinder member, the number of heaters for heating the cylinder member can be reduced. Further, the number of component parts of the injection apparatus can be reduced.

In still another injection apparatus of the present invention, a pressure-detection device for detecting pressure of a molding material present ahead of the injection member is disposed between the injection member and the linear motor device. Further, the injection member, the pressure-detection device, and the linear motor device are disposed on the same axis.

In this case, in a metering step, the injection member can be retreated without being rotated; therefore, the back-pressure detection accuracy of the pressure-detection device can be enhanced. Also, advancement of the injection member in an injection step and imposition of back pressure on the injection member in a dwelling step do not require conversion of rotary motion to linear motion, thereby preventing imposition of rotational force on the pressure-detection device, which is disposed between the linear motor device and the injection member. Further, transmission of tension arising in a rotation transmission system such as a timing belt to a ball screw shaft or the like is not involved, thereby preventing detection of tension by the pressure-detection device. Since the moving-direction conversion means, the rotation transmission system, and the like are not required, the number of component parts can be reduced accordingly. Additionally, since the injection member, the pressure-detection device, the linear motor device, and other members are disposed on the same axis, deflection, bending, strain, and the like of component parts are prevented from affecting detection to be performed by the pressure-detection device.

Therefore, the pressure-detection device can detect injection pressure and dwelling pressure at high accuracy, whereby back pressure, injection pressure, dwelling pressure, etc. can be favorably controlled.

In a further injection apparatus of the present invention, the linear motor device comprises a movable member disposed reciprocatably, a drive section frame surrounding the movable member, coil members disposed on the drive section frame, magnets disposed on the movable member in opposition to the coil members, and a guide device for supporting the movable member.

In a still further injection apparatus of the present invention, the coil members are disposed on a top wall and a bottom wall, respectively, of the drive section frame. Also, the magnets are disposed on an upper surface and a lower surface, respectively, of the movable member.

In this case, the guide devices are disposed between the drive section frame and the respective side surfaces of the movable member without the need to dispose the guide devices between the drive section frame and the upper and lower surfaces, respectively, of the movable member, thereby simplifying work for disposing the movable member. Also, the size of the movable member can be reduced, and thus the size of the linear motor device can be reduced.

A reduction in the size of the movable member allows a corresponding reduction in the weight of the movable member, thereby enhancing acceleration-deceleration characteristics of the linear motor device.

In the case of a plunger-type injection apparatus, a screw cylinder must be disposed above the linear motor device. Since the size of the linear motor device can be reduced, the linear motor device can be readily used as drive means for use in a plunger-type injection apparatus.

In yet another injection apparatus of the present invention, the guide device is disposed between a side surface of the movable member and the drive section frame.

In this case, since the guide devices are disposed between the drive section frame and the respective side surfaces of the movable member, the size of the movable member can be reduced in the width and height directions of the movable member, and thus the size of the linear motor device in the width and height directions of the linear motor device can be reduced.

Even when operation of the linear motor device is accompanied by thermal expansion of the drive section frame, a rail is reliably held by a block in each guide device. Therefore, the movable member can be smoothly reciprocated, and no load is imposed on the guide devices.

Since there is no need to dispose a magnet on each of the right and left side surfaces of the movable member, the movable member can be readily disposed in a magnetically neutral condition. Therefore, load imposed on the guide device can be reduced, thereby enhancing durability of the guide device.

Since the guide device is disposed between a side surface of the movable member and the drive section frame, the position of the movable member in the height direction can be adjusted through adjustment of the position of the block.

In still another injection apparatus of the present invention, the guide device is disposed between a lower surface of the movable member and the drive section frame.

In this case, since the guide device is not disposed between the upper surface of the movable member and the drive section frame, but is disposed between the lower surface of the movable member and the drive section frame, the size of the movable member in the height direction of the movable member can be reduced, and thus the size of the linear motor device in the height direction of the linear motor device can be reduced.

In a further injection apparatus of the present invention, the guide device is disposed between an upper surface of the movable member and the drive section frame.

In this case, since the guide device is not disposed between the lower surface of the movable member and the drive section frame, but is disposed between the upper surface of the movable member and the drive section frame, the size of the movable member in the height direction of the movable member can be reduced, and thus the size of the linear motor device in the height direction of the linear motor device can be reduced.

In a still further injection apparatus of the present invention, the guide device comprises a rail disposed on the movable member in such a manner as to extend in a longitudinal direction of the movable member and a block mounted on the drive section frame and adapted to hold the rail.

In this case, since the rail is disposed on the movable member while the block is disposed on the drive section frame, the size of the movable member in the height direction of the movable member can be reduced, and consequently the size of the linear motor device in the height direction of the linear motor device can be reduced.

In yet another injection apparatus of the present invention, force application means is disposed between the block and the drive section frame.

In still another injection apparatus of the present invention, the drive section frame comprises a protruding member formed in such a manner as to protrude outward.

In this case, since the drive section frame has the protruding member formed in such a manner as to protrude outward, the protruding member functions as a reinforcing member, thereby freeing the drive section frame from deformation. Therefore, variations in the thrust force of the movable member can be prevented, whereby the injection member can be advanced stably. As a result, the quality of molded articles can be improved.

Since, functioning as a cooling member, the protruding member cools the drive section frame, heat generated from the linear motor device in operation is not transmitted to the heating cylinder via the drive section frame. Therefore, the temperature of the molding material contained in the heating cylinder can be stabilized, thereby improving the quality of molded articles.

In a further injection apparatus of the present invention, a plurality of protruding members are provided. Also, an air flow path is formed between the protruding members.

In a still further injection apparatus of the present invention, the drive section frame comprises a side wall. Also, a cooling fan for taking in air is disposed on the side wall.

In this case, heat generated from the linear motor device in operation is not transmitted to the heating cylinder via the drive section frame. Therefore, the temperature of the molding material contained in the heating cylinder can be stabilized, thereby improving the quality of molded articles.

In yet another injection apparatus of the present invention, the cooling fan is covered with an air-cooling cover.

In this case, the cooling fan can be stably operated.

In still another injection apparatus of the present invention, the protruding member is disposed in such a manner as to extend perpendicularly to a moving direction of the movable member.

In this case, since the protruding member is disposed in such a manner as to extend perpendicularly to the moving direction of the movable member, air whose temperature has increased as a result from cooling the drive section frame is not sent to the periphery of the heating cylinder located ahead. Therefore, the temperature of the molding material contained in the heating cylinder can be further stabilized, thereby further improving the quality of molded articles.

A further injection apparatus of the present invention further comprises a position-detecting device for detecting a position of the movable member.

In a still further injection apparatus of the present invention, the position-detecting device is disposed outside the drive section frame.

In this case, since the position-detecting device is disposed outside the drive section frame, the position-detecting device is free from expansion and contraction which could otherwise result from the influence of heat generated from the linear motor device in operation and heat from a heater. Therefore, the detection accuracy of the position-detecting device can be enhanced, and maintenance and management of the position-detecting device can be facilitated. Since there is no need to provide a space within the drive section frame for installation of the position-detecting device, the size of the linear motor device can be reduced.

In yet another injection apparatus of the present invention, the position-detecting device comprises a first detection element fixedly attached to the drive section frame and a second detection element mounted on the movable member.

In still another injection apparatus of the present invention, a cutout portion is formed in the drive section frame. Also, the second detection element is mounted on a bracket which protrudes through the cutout portion and extends along the drive section frame.

In an injection method of the present invention, the metering member is rotated by metering drive means in order to feed a molding material, having been fed into a cylinder member, toward a front end of a metering member while melting the molding material, to thereby store the molding material in a space ahead of an injection member and retract the injection member by pressure of the molding material. Subsequently, the injection member is advanced through operation of a linear motor device in order to inject the stored molding material.

In another injection method of the present invention, pressure of the molding material, which pressure is transmitted via the injection member, is detected by use of a pressure-detection device. Then, back pressure is controlled on the basis of the pressure of the molding material.

### BRIEF DESCRIPTION OF DRAWINGS

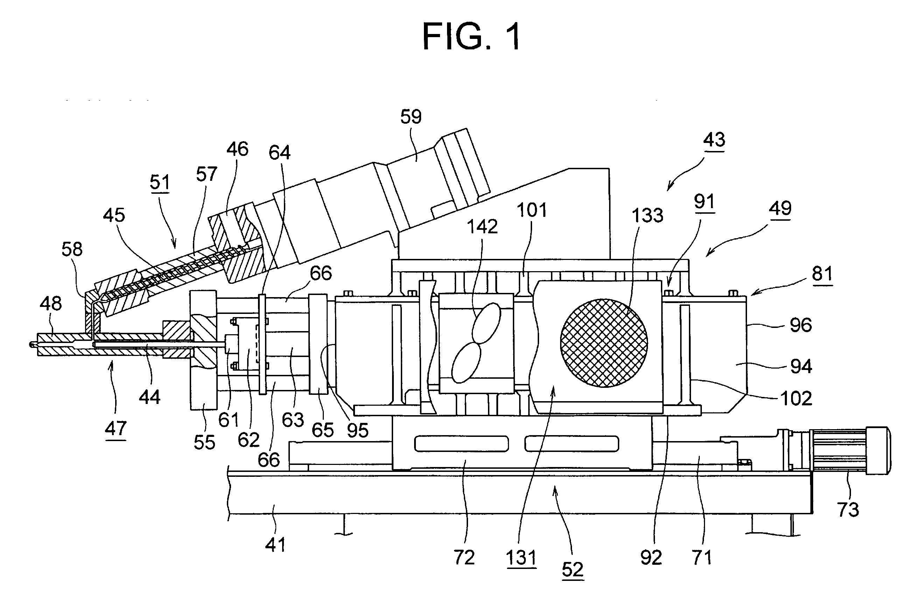

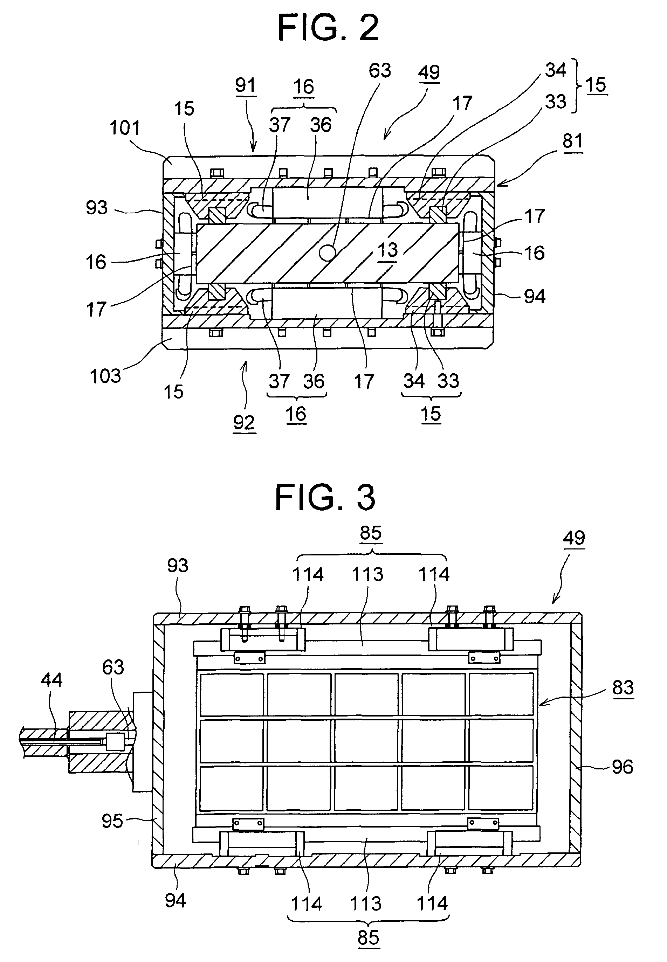

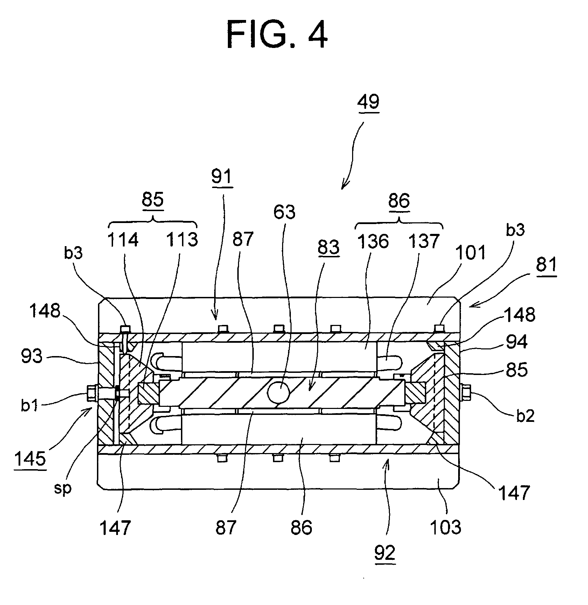

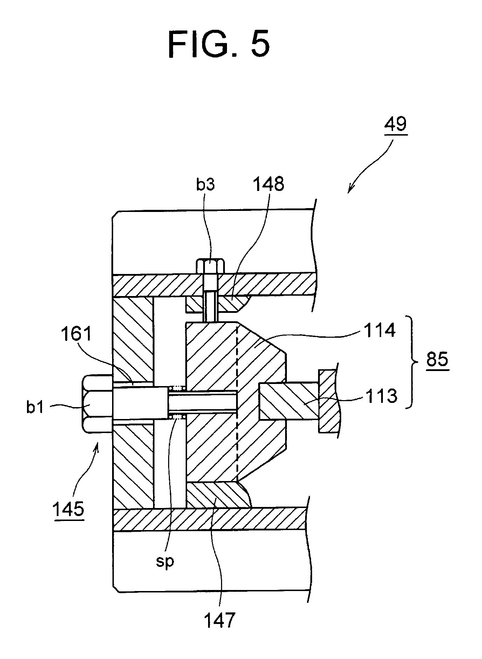

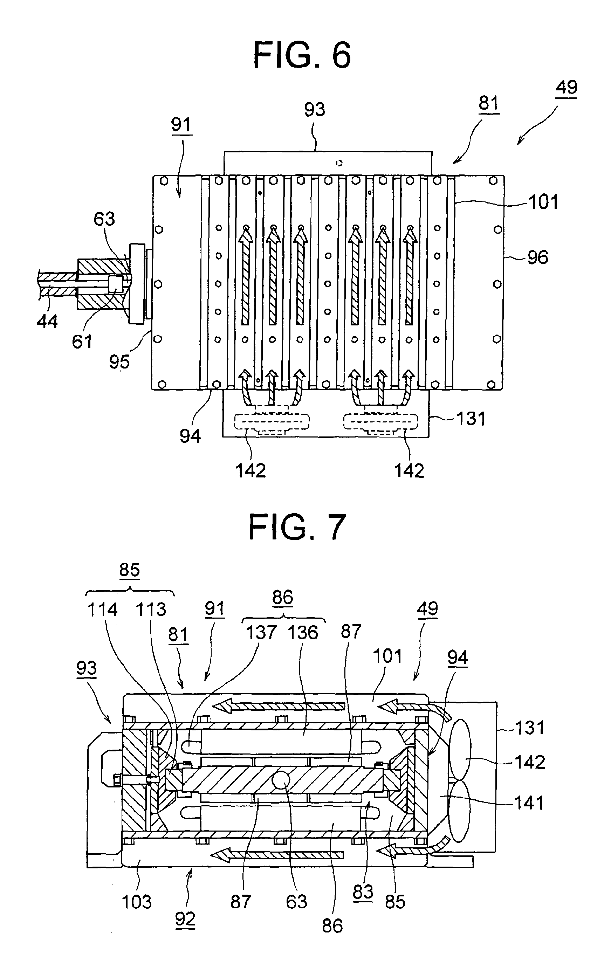

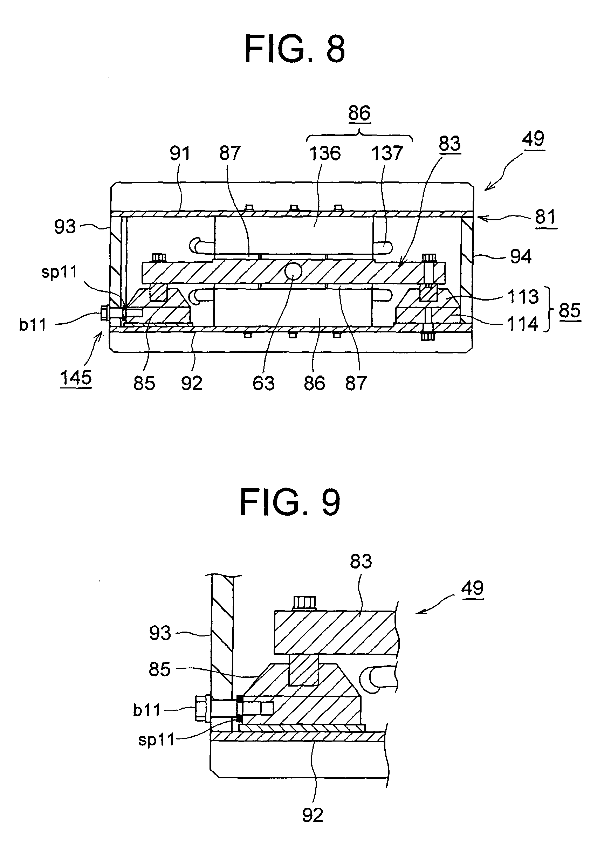

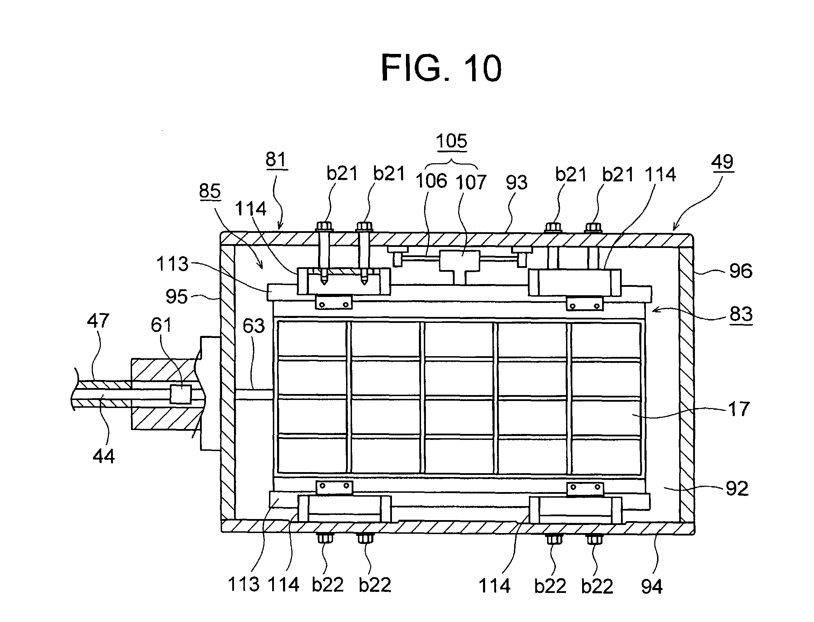

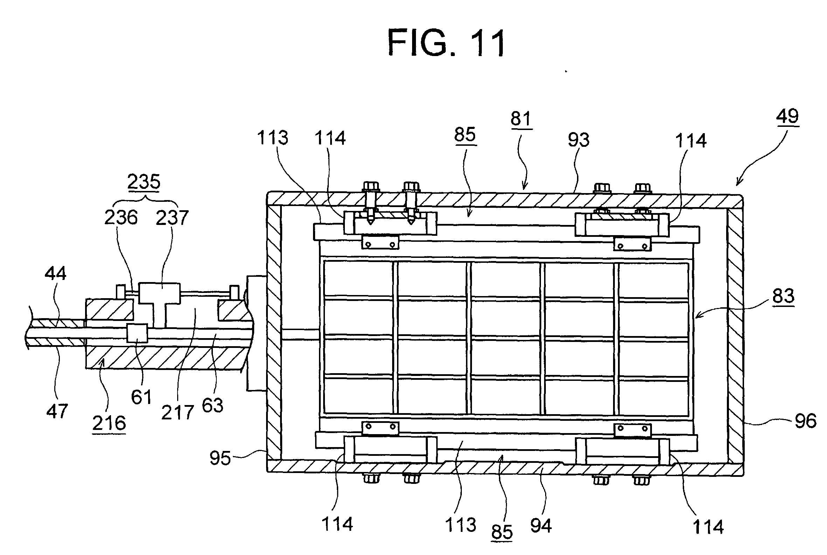

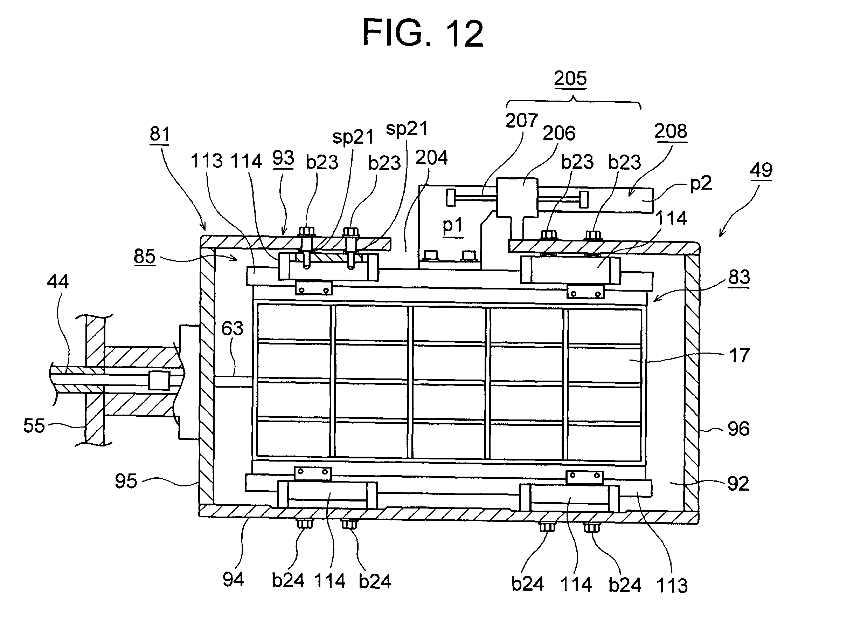

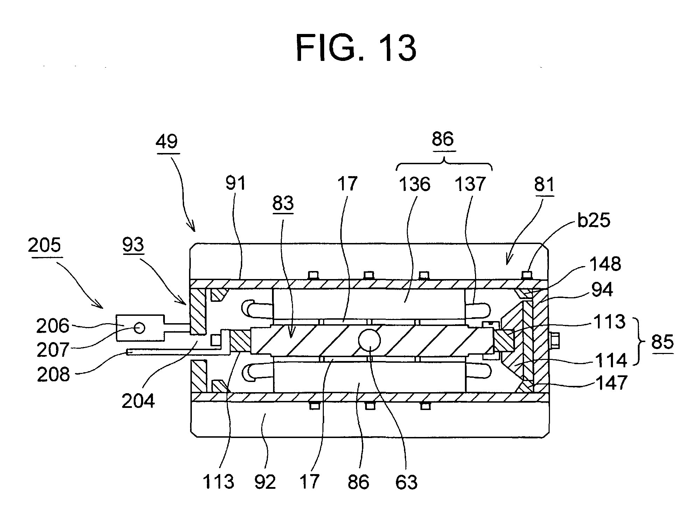

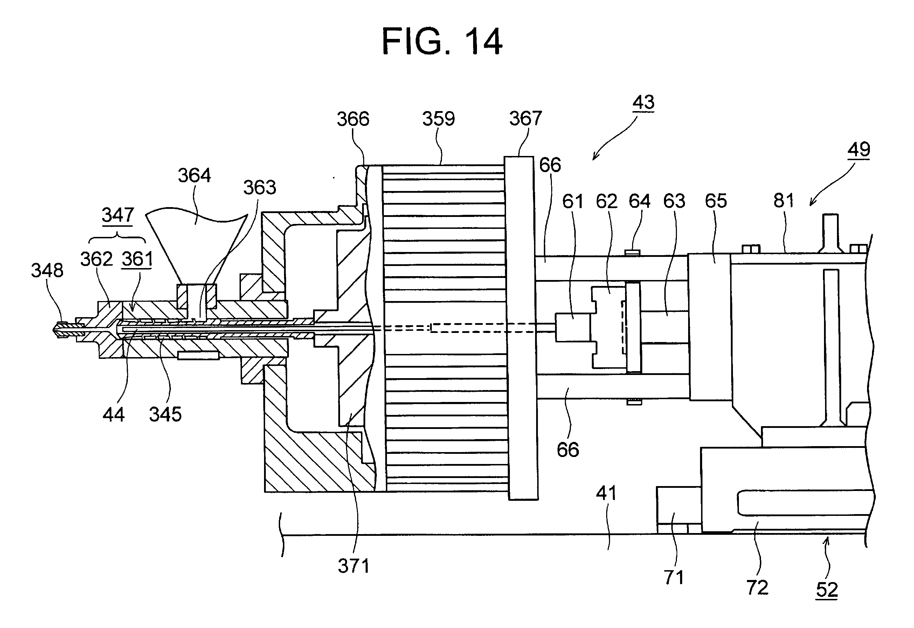

FIG. 1 is a front view of an injection apparatus according to a first embodiment of the present invention; FIG. 2 is a transverse cross section showing a main portion of a linear motor device in the first embodiment of the present invention; FIG. 3 is a longitudinal section showing a main portion of a linear motor device in a second embodiment of the present invention; FIG. 4 is a first transverse cross section showing a main portion of the linear motor device in the second embodiment of the present invention; FIG. 5 is an enlarged view showing a main portion of the linear motor device in the second embodiment of the present invention; FIG. 6 is a plan view of the linear motor device in the second embodiment of the present invention; FIG. 7 is a second transverse cross section showing a main portion of the linear motor device in the second embodiment of the present invention; FIG. 8 is a transverse cross section showing a main portion of a linear motor device in a third embodiment of the present invention; FIG. 9 is an enlarged view showing a main portion of the linear motor device in the third embodiment of the present invention; FIG. 10 is a longitudinal section of a linear motor device in a fourth embodiment of the present invention; FIG. 11 is a longitudinal section of a linear motor device in a fifth embodiment of the present invention; FIG. 12 is a longitudinal section of a linear motor device in a sixth embodiment of the present invention; FIG. 13 is a transverse cross section of the linear motor device in the sixth embodiment of the present invention; and FIG. 14 is a front view of an injection apparatus according to a seventh embodiment of the present invention.

### BEST MODE FOR CARRYING OUT THE INVENTION

The embodiments of the present invention will next be described in detail with reference to the drawings.

FIG. 1 is a front view of an injection apparatus according to a first embodiment of the present invention, and FIG. 2 is a transverse cross section showing a main portion of a linear motor device in the first embodiment of the present invention.

In FIGS. 1 and 2, reference numeral 41 denotes an injection-molding machine frame, which serves as a molding machine base. An injection apparatus 43, an unillustrated mold apparatus, and an unillustrated mold-clamping apparatus are disposed on the injection-molding machine frame 41. The mold apparatus includes a stationary mold and a movable mold. The mold-clamping apparatus includes a stationary platen fixed on the injection-molding machine frame 41, a movable platen, a toggle mechanism, and a mold-clamping motor, which serves as mold-clamping drive means for actuating the toggle mechanism. The mold-clamping motor, when operated, actuates the toggle mechanism so as to move the movable platen toward and away from the stationary platen, whereby the mold apparatus undergoes mold closing, mold clamping, and mold opening. When mold clamping is performed, a cavity is formed between the movable mold and the stationary mold. The present embodiment uses a mold-clamping motor as mold-clamping drive means. However, a mold-clamping cylinder may be used as the mold-clamping drive means.

The injection apparatus 43 includes a heating cylinder 47, which serves as a first cylinder member; an injection nozzle 48 disposed at the front end (the left end in FIG. 1) of the heating cylinder 47; a plunger 44, which serves as an injection member, disposed reciprocatably in the heating cylinder 47; a linear motor device 49, which serves as injection drive means, for advancing and retreating the plunger 44; and a screw cylinder 51, which serves as a plasticizing device, connected to the heating cylinder 47 at a predetermined position and adapted to melt and supply a resin as a molding material to the heating cylinder 47. An injection-apparatus-moving mechanism 52 moves the injection apparatus 43 toward and away from the stationary platen (in the right and left directions in FIG. 1). When the injection apparatus 43 advances (moves leftward in FIG. 1), nozzle touch can be performed. Thus, the injection-apparatus-moving mechanism 52 includes two guide bars 71 (one of which is only shown in FIG. 1) mounted on the injection-molding machine frame 41; a slide base 72 disposed movably along the guide bars 71 and adapted to support the linear motor device 49; a motor 73, which serves as injection-apparatus-moving drive means; an unillustrated ball screw shaft, which serves as a first conversion element, to be rotated through operation of the motor 73; and an unillustrated ball nut, which serves as a second conversion element, mounted on the slide base 72 and screw-engaged with the ball screw shaft. Therefore, when the ball screw shaft is rotated through operation of the motor 73, the injection apparatus 43 advances and retreats via the slide base 72. Notably, the ball screw shaft and the ball nut constitute moving-direction conversion means for converting rotary motion to linear motion. The present embodiment uses a ball screw, which is composed of the ball screw shaft and the ball nut, as moving-direction conversion means for converting rotary motion to linear motion. However, in place of the ball screw, a roller screw may be used. The roller screw includes a roller screw shaft, which serves as a first conversion element, and a roller nut, which serves as a second conversion element, screw-engaged with the roller screw shaft.

The stationary platen and a support plate 55 are connected by means of unillustrated expandable connection rods, which are diagonally disposed. The heating cylinder 47 is supported at its rear end (its right end in FIG. 1) by means of the support plate 55. The screw cylinder 51 includes a cylinder portion 57, which serves as a second cylinder member; a connection member 58 for connecting the front end of the cylinder portion 57 and the heating cylinder 47; a screw 45, which serves as a metering member and as a plasticizing member, disposed rotatably in the cylinder portion 57; and a motor 59, which serves as drive means for material supply and metering use, for rotating the screw 45. The screw cylinder 51 extends obliquely upward from the connection position where the screw cylinder 51 is connected to the heating cylinder 47. A spiral flight is formed on the outer surface of the screw 45, and a groove is formed along the flight. In place of the motor 59, an oil hydraulic motor may be used as the drive means for material supply and metering use. The plunger 44 and the screw 45 are disposed on different axes in such a manner as to at least partially overlap each other in the axial direction.

The plunger 44 is connected to an output shaft 63 of the linear motor device 49 via an adapter 61, a load cell 62, and a movable plate 64. The load cell 62 serves as a pressure-detection device for detecting injection pressure, dwelling pressure, and back pressure to be generated by the linear motor device 49. The movable plate 64 serves as a movable support member. The plunger 44, the adapter 61, the load cell 62, the output shaft 63, and the movable portion 13 are disposed on the same axis. Notably, in place of the load cell 62, which serves as a pressure-detection device, another dynamometer may be used. Injection pressure, dwelling pressure, and back pressure which are detected by means of the load cell 62 are sent to an unillustrated control section. Notably, injection pressure, dwelling pressure, and back pressure can be represented in terms of pressure of resin present ahead of (in FIG. 1 leftward of) the plunger 44.

In order to advance and retreat the plunger 44 along the axis of the heating cylinder 47, four guide rods 66 (two of which are only shown in FIG. 1) extend between the support plate 55 and a plate 65 attached to the linear motor device 49, and the movable plate 64 moves while being guided along the guide rods 66.

Reference numeral 81 denotes a drive section frame. The drive section frame 81 includes a top wall 91, a bottom wall 92, side walls 93 and 94, a front wall 95, and a rear wall 96. A plurality of ribs 101, which serve as protruding members, for enhancing structural strength and radiating heat generated from the linear motor device 49 in operation are formed on the top wall 91 in parallel with one another and perpendicularly to the moving direction of the movable portion 13, which is disposed reciprocatably (in a manner movable toward the near side and the far side along the direction perpendicular to the paper on which FIG. 2 appears) in the drive section frame 81. Similarly, a plurality of ribs 103, which serve as protruding members, for enhancing structural strength and radiating heat generated from the linear motor device 49 in operation are formed on the bottom wall 92 in parallel with one another and perpendicularly to the moving direction of the movable portion 13. Reference numeral 131 denotes an air-cooling cover which is disposed in such a manner as to cover the side wall 94 and is adapted to cool the linear motor device 49. An air intake 133 is formed on the air-cooling cover 131. Also, an unillustrated air-cooling cover is disposed in such a manner as to cover the side wall 93, and an air outlet is formed on the air-cooling cover. A mesh is disposed on the air intake 133. Two suction-type cooling fans 142 are mounted on the side wall 94 along the axial direction of the linear motor device 49. A plurality of ribs 102 for enhancing structural strength and radiating heat generated from the linear motor device 49 in operation are formed on the side walls 93 and 94 in parallel with one another and perpendicularly to the moving direction of the movable portion 13. Notably, the ribs 101 to 103 each assume the form of a protruding member that protrudes outward, and function as reinforcing members and as cooling members.

Next, the linear motor device 49 will be described.

The linear motor device 49 includes the drive section frame 81; the movable portion 13; four guide devices 15, which serve as guide members, for slidably supporting and guiding the movable portion 13; four coil members 16, which serve as primary elements, disposed on the drive section frame 81 and adapted to move the movable portion 13; and magnets 17, which serve as secondary elements, disposed on the upper surface and right-and-left side surfaces of the movable portion 13 in opposition to the corresponding coil members 16. The output shaft 63 is formed at the front end of the movable portion 13. The output shaft 63 is connected to the plunger 44 via the movable plate 64, the load cell (resin pressure detection means) 62, and the adapter 61. The movable portion 13 and the coil members 16 constitute a linear motor.

The guide devices 15 includes rails 33 and blocks 34. The rails 33 are disposed on the upper and lower surfaces of the movable portion 13 in such a manner as to extend longitudinally. The blocks 34 are disposed on the lower surface of the top wall 91 and the upper surface of the bottom wall 92 in such a manner as to correspond to the rails 33 and at a plurality of positions, at two positions in the present embodiment, along the longitudinal direction of the movable portion 13. The blocks 34 hold the corresponding rails 33. Unillustrated balls roll on rolling surfaces formed between the rails 33 and the corresponding blocks 34.

The coil members 16 include cores 36 mounted on the top wall 91, the bottom wall 92, and the side walls 93 and 94, respectively, and coils 37 wound on the corresponding cores 36. For example, when phase currents of relevant phases, which are generated by means of an unillustrated inverter, are supplied to the coils 37, the coil members 16 generate magnetic flux. The thus-generated magnetic flux links with the magnets 17. As a result, magnetically attractive and repulsive forces are generated between the coil members 16 and the corresponding magnets 17. The thus-generated attractive and repulsive forces generate a drive force on the magnets 17. Serving as a thrust force for the movable portion 13, the thus-generated drive force causes the movable portion 13 to move reciprocatably.

In a metering step, the thus-configured injection apparatus operates in the following manner. Metering process means of the control section performs a calculation process and causes the screw 45 to rotate through operation of the motor 59. Resin which is supplied into the cylinder portion 57 through a material supply port 46 is melted. The molten resin is caused to advance along a groove on the screw 45 and is then supplied into the heating cylinder 47 via the connection member 58. As a result, the pressure of the resin causes the plunger 44 to retreat (move rightward in FIG. 1), whereby the resin is stored ahead of the plunger 44 in the heating cylinder 47. At this time, the metering process means receives back pressure detected by the load cell 62 and causes the linear motor device 49 to operate so as to control back pressure imposed on the plunger 44. Notably, a changeover valve may be provided in the connection member 58 in order to selectively establish communication between the interior of the heating cylinder 47 and the interior of the cylinder portion 57, whereby back pressure to be imposed on the screw 45 can be adjusted through reduction of opening of the changeover valve.

In an injection step, injection process means of the control section performs an injection process, thereby causing the plunger 44 to advance through operation of the linear motor device 49. As a result, the resin is injected into the aforementioned cavity from the injection nozzle 48. At this time, the injection process means performs speed control by means of the linear motor device 49 and detects, by means of the load cell 62, injection pressure which the plunger 44 has generated.

Upon completion of the injection step, a dwelling step starts. In the dwelling step, dwelling process means of the control section performs a dwelling process, thereby controlling dwelling pressure through operation of the linear motor device 49. At this time, the dwelling process means receives dwelling pressure detected by the load cell 62 and causes the linear motor device 49 to operate so as to control dwelling pressure which the plunger 44 generates.

As described above, according to the present embodiment, the heating cylinder 47 and the cylinder portion 57 are connected via the connection member 58 and extend rearward (rightward in FIG. 1) while being juxtaposed with each other. Also, the plunger 44 and the screw 45 are disposed in such a manner as to at least partially overlap each other in the axial direction. Therefore, the axial size of the injection apparatus 43 can be reduced. Further, the stroke of the plunger 44 between the retreat limit and the advancement limit can be increased accordingly.

Also, in the injection step, the linear motor device 49, when operated, can directly advance the plunger 44 for carrying out injection; as a result, the plunger 44 can be advanced without the need to convert rotary motion to linear motion by use of moving-direction conversion means such as a ball screw, thereby preventing occurrence of energy loss. Therefore, the efficiency of the injection apparatus 43 can be enhanced.

Further, since the plunger 44 and the screw 45 are disposed independently of each other, the plasticizing capability of the screw 45 can be selected freely and independently of the durability of the plunger 44, whereby sufficient metering stability can be secured. Since moving-direction conversion means such as a ball screw is not employed, no backlash is involved, and hence the stop position accuracy of the plunger 44 is enhanced.

In the metering step, the plunger 44 can be retreated without the need to be rotated; therefore, the back-pressure detection accuracy of the load cell 62 can be enhanced. Also, advancement of the plunger 44 in the injection step and imposition of back pressure on the plunger 44 in the dwelling step do not require conversion of rotary motion to linear motion, thereby reliably preventing imposition of rotational force on the load cell 62, which is disposed between the linear motor device 49 and the plunger 44. Further, transmission of tension arising in a rotation transmission system such as a timing belt to a ball screw shaft or the like is not involved, whereby the load cell 62 is prevented from detecting tension. Since the moving-direction conversion means, the rotation transmission system, and the like are not required, the number of component parts can be reduced accordingly. Additionally, since the plunger 44, the adapter 61, the load cell 62, the output shaft 63, the movable portion 13, and other members are disposed on the same axis, deflection, bending, strain, and the like of component parts are prevented from affecting detection to be performed by the load cell 62.

Therefore, the load cell 62 can detect injection pressure and dwelling pressure at high accuracy, whereby back pressure, injection pressure, and dwelling pressure can be favorably controlled.

In the metering step, since the plunger 44 and the screw 45 are disposed independently of each other, transmission of rotation from the motor 59 in operation to the screw 45 does not require a rotation transmission system, which would otherwise be formed between the motor 59 and the plunger 44. Therefore, the structure between the plunger 44 and the movable portion 13 can be simplified, whereby the weight of movable members such as the plunger 44 and the movable portion 13 can be reduced, thereby enhancing response of the injection apparatus 43.

A thrust force that is generated through operation of the linear motor device 49 is small; however, by means of reducing the diameter of the plunger 44, injection pressure can be increased. Further, since there is no need to form a flight, a groove, or the like on the plunger 44, the durability of the plunger 44 can be enhanced.

Since injection pressure can be sufficiently increased, there is no need to increase the capacity of the linear motor. Therefore, the size of the injection apparatus 43 can be reduced.

Also, even when the plunger 44 and the screw 45 are arranged in parallel with each other, similar effect can be yielded.

Meanwhile, in the thus-configured linear motor device 49, the magnets 17 are disposed on the upper and lower surfaces and right and left side surfaces of the movable portion 13; as a result, work of disposing the movable portion 13 is complicated.

Also, the screw cylinder 51 must be disposed above the linear motor device 49. In this connection, since the guide devices 15 are disposed between the movable portion 13 and the top wall 91 and between the movable portion 13 and the bottom wall 92, the size of the linear motor device 49 in the height direction is unavoidably increased.

Thus, next will be described a second embodiment of the present invention configured in such a manner as to simplify work of disposing the movable portion 13 and to reduce the size of the linear motor device 49. Structural features similar to those of the first embodiment are denoted by common reference numerals, and redundant description thereof is omitted.

FIG. 3 is a longitudinal section showing a main portion of a linear motor device in the second embodiment of the present invention; FIG. 4 is a first transverse cross section showing a main portion of the linear motor device in the second embodiment of the present invention; FIG. 5 is an enlarged view showing a main portion of the linear motor device in the second embodiment of the present invention; FIG. 6 is a plan view of the linear motor device in the second embodiment of the present invention; and FIG. 7 is a second transverse cross section showing a main portion of the linear motor device in the second embodiment of the present invention.

In FIGS. 3 to 7, reference numeral 49 denotes a linear motor device for advancing and retreating the plunger 44. The linear motor device 49 includes a drive section frame 81; a movable member 83 surrounded by the drive section frame 81 and disposed reciprocatably (in a manner movable in the right-and-left direction in FIG. 3) in the drive section frame 81; guide devices 85 disposed between the drive section frame 81 and the right and left side surfaces, respectively, of the movable member 83 and adapted to slidably support and guide the movable member 83; coil members 86, which serve as primary elements, disposed on a top wall 91 and a bottom wall 92, respectively, of the drive section frame 81 and adapted to move the movable member 83; and magnets 87, which serve as secondary elements, disposed on the upper and lower surfaces of the movable member 83 in opposition to the corresponding coil members 86. Notably, the output shaft 63 is formed at the front end (in FIGS. 3 and 6, at the left end) of the movable member 83. The output shaft 63 is connected to the aforementioned plunger 44.

The guide devices 85 includes rails 113 and blocks 114. The rails 113 are disposed on the right and left side surfaces of the movable member 83 in such a manner as to extend longitudinally. The blocks 114 are mounted on the drive section frame 81 in the following manner: the blocks 114 are disposed on the inner surfaces of the side walls 93 and 94 in such a manner as to correspond to the rails 113 and at a plurality of positions, at two positions in the present embodiment, along the longitudinal direction of the movable member 83. The blocks 114 hold the corresponding rails 113. Unillustrated balls roll on rolling surfaces formed between the rails 113 and the corresponding blocks 114.

The coil members 86 include cores 136 mounted on the top and bottom walls 91 and 92, respectively, of the drive section frame 81, and coils 137 wound on the corresponding cores 136. For example, when phase currents of relevant phases, which are generated by means of an unillustrated inverter, are supplied to the coils 137, the coil members 86 generate magnetic flux. The thus-generated magnetic flux links with the magnets 87. As a result, magnetically attractive and repulsive forces are generated between the coil members 86 and the corresponding magnets 87. The thus-generated attractive and repulsive forces generate a drive force on the magnets 87. Serving as a thrust force for the movable member 83, the thus-generated drive force causes the movable member 83 to move linearly.

Thus, the guide devices 85 are disposed between the side walls 93 and 94 and the respective right and left side surfaces of the movable member 83 without the need to dispose the guide devices between the top wall 91 and the upper surface of the movable member 83 and between the bottom wall 92 and the lower surface of the movable member 83, thereby simplifying work for disposing the movable member 83 and reducing the size of the movable member 83 in the height direction. As a result, the size of the linear motor device 49 in the height direction can be reduced. Also, since there is no need to dispose magnets on the respective right and left side surfaces of the movable member 83, and there is no need to dispose coil members on the respective side walls 93 and 94, the size of the linear motor device 49 in the width direction can be reduced further.

Further, since the rails 113 are disposed on the respective right and left side surfaces of the movable member 83, and the blocks 114 are disposed on the respective side walls 93 and 94, the size of the movable member 83 in the height direction can be reduced; as a result, the size of the linear motor device 49 in the height direction can be reduced.

Since the weight of the movable member 83 can be reduced to a degree corresponding to a reduction in the size of the movable member 83 in the width and height directions, acceleration-deceleration characteristics of the linear motor device 49 can be enhanced.

In the case of the plunger-type injection apparatus 43 (FIG. 1), the screw cylinder 51 must be disposed above the linear motor device 49. Since the size of the linear motor device 49 in the height direction can be reduced, the linear motor device 49 can be readily used as drive means for use in the plunger-type injection apparatus 43.

Meanwhile, since operation of the linear motor device 49 involves supply of phase current to the coils 137, the coils 137 generate heat, which causes thermal expansion of the top and bottom walls 91 and 92. In order to absorb thermal expansion of the top and bottom walls 91 and 92, thermal-expansion absorption means 145 is disposed between at least one of the side walls 93 and 94 and the guide device 85, in the present embodiment between the side wall 93 and the guide device 85. The thermal-expansion absorption means 145 includes a bolt b1 disposed in such a manner as to extend through the side wall 93 perpendicularly to the rail 113 and screw-engaged with the block 114, and a spring sp, which serves as force application means, disposed in a gap between the side wall 93 and the block 114 in such a manner as to surround the bolt b1 and to apply pre-load to the block 114. An insertion hole 161 is formed in the side wall 93 so as to slidably support the bolt b1. Reference symbol b2 denotes a bolt that serves as fixation means for connecting the side wall 94 and the block 114. In the present embodiment, the thermal-expansion absorption means 145 is disposed between the side wall 93 and the guide device 85. However, similar thermal-expansion absorption means may also be disposed between the side wall 94 and the guide device 85.

When the top wall 91 and the bottom wall 92 thermally expand as a result from operation of the linear motor device 49, an impelling force of the springs sp presses the blocks 114 toward the movable member 83, whereby the blocks 114 sufficiently retain the corresponding rails 113. This is accompanied by an increase in the gap between the side wall 93 and the blocks 114. When the coils 134 stop generating heat as a result of the linear motor device 49 stopping running, the top wall 91 and the bottom wall 92 are cooled and contract. While retaining the corresponding rails 113, the blocks 114 are pressed toward the side wall 93 against the impelling force of the springs sp. This is accompanied by a decrease in the gap between the side wall 93 and the blocks 114. As a result, the guide devices 85 function such that the blocks 114 reliably hold the corresponding rails 113, thereby allowing smooth reciprocative motion of the movable member 83.

In order to adjust the position of the movable member 83 in the height direction, support blocks 147 are disposed between the corresponding blocks 114 and the bottom wall 92, thereby supporting the corresponding blocks 114. Also, adjustment blocks 148 are disposed between the corresponding blocks 114 and the top wall 91, and adjustment bolts b3 are disposed in such a manner as to extend through the corresponding adjustment blocks 148. By means of changing the size of the support blocks 147 in the height direction and changing the position of the bottom ends of the adjustment bolts b3 through rotation of the adjustment bolts b3, the position of the blocks 114 in the height direction can be adjusted so as to adjust the position of the movable member 83 in the height direction.

The rails 113 are longitudinally slidable with respect to the blocks 114. Since there is no need to dispose a magnet on each of the right and left side surfaces of the movable member 83, the movable member 83 can be disposed in a magnetically neutral condition. Therefore, load to be imposed on the guide devices 85 can be reduced, thereby enhancing durability of the guide devices 85.

Meanwhile, a plurality of ribs 101 for enhancing structural strength and radiating heat generated from the linear motor device 49 in operation are formed at predetermined intervals on the top wall 91 in parallel with one another and perpendicularly to the moving direction of the movable member 83. Similarly, a plurality of ribs 103 for enhancing structural strength and radiating heat generated from the linear motor device 49 in operation are formed at predetermined intervals on the bottom wall 92 in parallel with one another and perpendicularly to the moving direction of the movable member 83. Notably, a plurality of ribs for enhancing structural strength and radiating heat generated from the linear motor device 49 in operation may also be formed on the side walls 93 and 94 in parallel with one another and perpendicularly to the moving direction of the movable member 83. An air flow path for cooling the linear motor device 49 can be formed above the linear motor device 49; specifically, between the linear motor device 49 and the metering motor 59 as well as below the linear motor device 49; specifically, between the linear motor device 49 and the molding machine frame 41. Reference numeral 131 denotes an air-cooling cover which is disposed in such a manner as to cover the side wall 94 and is adapted to cool the linear motor device 49. An air intake 133 (FIG. 1) is formed on the air-cooling cover 131, and a mesh is disposed on the air intake 133. A mount portion 141 is formed on the side wall 94. Two suction-type cooling fans 142 are mounted on the mount portion 141 along the axial direction of the linear motor device 49. Each of the cooling fans 142 is rotated through operation of an unillustrated suction motor, which serves as cooling drive means. As the cooling fans 142 rotate, air is taken in through the air intakes 133. Air that is taken in cools the side wall 94 and then flows through air flow paths formed between the ribs 101 and through air flow paths formed between the ribs 103 along the directions of the arrows of FIGS. 6 and 7 while being guided by the ribs 101 and 103. Notably, the ribs 101 and 103 each assume the form of a protruding member that protrudes outward, and function as reinforcing members and as cooling members.

In this case, as the movable member 83 is moved, stress is exerted on the drive section frame 81. However, since the ribs 101 and 103 are formed on the drive section frame 81, the drive section frame 81 is not deformed. Therefore, variations in the thrust force of the movable member 83 can be prevented, whereby the plunger 44 can be advanced (moved leftward in FIGS. 3 and 6) stably. As a result, not only can the quality of molded articles be improved, but also the plate thickness of the drive section frame 81 can be reduced, whereby the weight of the linear motor device 49 can be reduced, thereby reducing vibrations which are induced by the linear motor device 49 in operation.

Meanwhile, when heat generated from the linear motor device 49 in operation is transmitted to the heating cylinder 47, which serves as a first cylinder member, via the drive section frame 81, the temperature of resin, which serves as a molding material, contained in the heating cylinder 47 varies, resulting in an impairment in the quality of molded articles. However, since the ribs 101 and 103 serve as cooling members, and air that is forcibly taken in by means of the cooling fans 142 is sent to the air flow paths to thereby cool the top wall 91 and the bottom wall 92, heat generated from the linear motor device 49 in operation is not transmitted to the heating cylinder 47 via the drive section frame 81. Therefore, the temperature of resin contained in the heating cylinder 47 does not vary, thereby improving the quality of molded articles.

Further, since the ribs 101 and 103 are formed perpendicularly to the moving direction of the movable member 83, air whose temperature has increased as a result from cooling the top wall 91 and the bottom wall 92 is not sent to the periphery of the heating cylinder 47 located ahead. Therefore, the temperature of resin contained in the heating cylinder 47 can be further stabilized, thereby further improving the quality of molded articles.

Since the mount portion 141 is disposed on the side wall 94, a plurality of cooling fans 142, which serve as heat transport members, can be disposed, thereby enhancing cooling performance. Also, the cooling fans 142 are covered with the air-cooling cover 131, and meshes are disposed on the corresponding air intakes 133, thereby preventing entry of dust, grunge, and the like into the interior of the air-cooling cover 131. Therefore, the cooling fans 142 can be stably operated.

Next, a third embodiment of the present invention will be described. Structural features similar to those of the first and second embodiments are denoted by common reference numerals, and redundant description thereof is omitted.

FIG. 8 is a transverse cross section showing a main portion of a linear motor device in the third embodiment of the present invention; and FIG. 9 is an enlarged view showing a main portion of the linear motor device in the third embodiment of the present invention.

In this case, the linear motor device 49 includes the drive section frame 81; the movable member 83 disposed reciprocatably (in a manner movable toward the near side and the far side along the direction perpendicular to the paper) in the drive section frame 81; two guide devices 85 disposed between the lower surface of the movable member 83 and the drive section frame 81 and adapted to slidably support and guide the movable member 83; two coil members 86, which serve as primary elements, disposed on the top wall 91 and the bottom wall 92, respectively, of the drive section frame 81 and adapted to move the movable member 83; and the magnets 87, which serve as secondary elements, disposed on the upper and lower surfaces of the movable member 83 in opposition to the corresponding coil members 86. Notably, the output shaft 63 is formed at the front end (in FIG. 8, at the left end) of the movable member 83.

The drive section frame 81 includes the top wall 91, the bottom wall 92, the side walls 93 and 94, and unillustrated front and rear walls.

The guide devices 85 includes rails 113 and blocks 114. The rails 113 are disposed on the bottom surface of the movable member 83 in such a manner as to extend longitudinally. The blocks 114 are disposed on the upper surface of the bottom wall 92 in such a manner as to correspond to the rails 113 and at a plurality of positions, at two positions in the present embodiment, along the longitudinal direction of the movable member 83. The blocks 114 hold the corresponding rails 113.

In order to absorb thermal expansion of the bottom wall 92, thermal-expansion absorption means 145 is disposed between at least'one of the side walls 93 and 94 and the guide device 85, in the present embodiment between the side wall 93 and the guide device 85. The thermal-expansion absorption means 145 includes a bolt b11 disposed in such a manner as to extend through the side wall 93 perpendicularly to the rail 113 and screw-engaged with the block 114, and a spring sp11, which serves as force application means, disposed in a gap between the side wall 93 and the block 114 in such a manner as to surround the bolt b11 and to apply pre-load to the block 114.

In this case, the guide devices 85 are disposed between the bottom wall 92 and the lower surface of the movable member 83 without the need to dispose the guide devices between the top wall 91 and the upper surface of the movable member 83, thereby simplifying work for disposing the movable member 83. Also, since there is no need to dispose the guide devices between the top wall 91 and the upper surface of the movable member 83, the size of the movable member 83 in the height direction can be reduced; as a result, the size of the linear motor device 49 in the height direction can be reduced.

In the present embodiment, the guide devices 85 are disposed between the drive section frame 81 and the lower surface of the movable member 83. However, the guide devices 85 may be disposed between the drive section frame 81 and the upper surface of the movable member 83.

In the above-described embodiments, in the injection step, the speed of advancing the plunger 44 (FIG. 1); i.e., the plunger speed, must be controlled on the basis of the position of the plunger 44, which serves as an injection member. Thus, next will be described a fourth embodiment of the present invention that includes a position sensor, which serves as a position-detecting device, for detecting the position of the plunger 44. Structural features similar to those of the first embodiment are denoted by common reference numerals, and redundant description thereof is omitted.

FIG. 10 is a longitudinal section of a linear motor device in the fourth embodiment of the present invention.

In this case, a position sensor 105, which serves as a position-detecting device, for detecting the position of the plunger 44, which serves as an injection member, is disposed in the drive section frame 81. The position sensor 105 includes a stationary element 106, which serves as a first stationary element, and a movable element 107, which serves as a second stationary element. The stationary element 106 is mounted on the inner surface of the side wall 93. The movable element 107 is mounted on the rail 113 at a predetermined position in such a manner as to correspond to the stationary element 106. The stationary element 106 has a length corresponding to the stroke of the movable member 83 and is disposed between the blocks 114 in such a manner as to extend in parallel with the rail 113. As the movable member 83 moves, the movable element 107 moves along the stationary element 106. On the basis of the amount of movement of the movable element 107 relative to the stationary element 106, the position of the movable member 83 is detected, whereby the position of the plunger 44 is detected.

The blocks 114 are mounted on the side wall 93 via bolts b21 and on the side wall 94 via bolts b22.

Next, a fifth embodiment of the present invention will be described. Structural features similar to those of the first embodiment are denoted by common reference numerals, and redundant description thereof is omitted.

FIG. 11 is a longitudinal section of a linear motor device in the fifth embodiment of the present invention.

In FIG. 11, reference numeral 216 denotes a tubular connection portion attached to the front wall 95. The heating cylinder 47, which serves as a first cylinder member, is fixedly attached to the front wall 95 via the connection portion 216. A cutout 217 is formed on the connection portion 216 at a predetermined position. A position sensor 235, which serves as a position-detecting device, is disposed in the cutout 217. The position sensor 235 includes a stationary element 236, which serves as a first stationary element, and a movable element 237, which serves as a second stationary element. The stationary element 236 is mounted on the outer surface of the connection portion 216 at the predetermined position. The movable element 237 is mounted on the output shaft 63 at a predetermined position in such a manner as to correspond to the stationary element 236. The stationary element 236 has a length corresponding to the stroke of the movable member 83 and extends along the connection portion 216 in the axial direction of the output shaft 63.

In the previously described fourth embodiment, the position sensor 105 (FIG. 10) is disposed within the drive section frame 81. Thus, not only do the stationary element 106, the movable element 107, and other members expand and contract under the influence of heat generated from the linear motor device 49 in operation, but also lubricating oil applied or supplied to the aforementioned rolling surfaces adheres to the stationary element 106, the movable element 107, and other members, thereby impairing the detection accuracy of the position sensor 105.

Also, since the position sensor 105 is disposed within the drive section frame 81, the position sensor 105 encounters difficulty in maintenance and management. Further, the position sensor 105 to be disposed within the drive section frame 81 requires a space for disposition thereof within the drive section frame 81, resulting in an increase in the size of the linear motor device 49.

In the above-described fifth embodiment, the connection portion 216 is formed adjacently to the heating cylinder 47. Thus, the stationary element 236, the movable element 237, and other members expand and contract under the influence of heat generated from unillustrated heaters disposed on the heating cylinder 47, thereby impairing the detection accuracy of the position sensor 235.

Thus, next will be described a sixth embodiment of the present invention capable of enhancing the detection accuracy of a position-detecting device, facilitating maintenance and management, and allowing a reduction in the size of the linear motor device 49. Structural features similar to those of the first, fourth, and fifth embodiments are denoted by common reference numerals, and redundant description thereof is omitted.

FIG. 12 is a longitudinal section of a linear motor device in the sixth embodiment of the present invention; and FIG. 13 is a transverse cross section of the linear motor device in the sixth embodiment of the present invention.

In FIGS. 12 and 13, reference numeral 49 denotes a linear motor device. The linear motor device 49 includes the movable member 83 disposed reciprocatably (in a manner movable in the right-and-left direction in FIG. 12); the drive section frame 81 surrounding the movable member 83; the guide devices 85 disposed between the drive section frame 81 and the respective right and left side surfaces of the movable member 83 and adapted to slidably support and guide the movable member 83; the coil members 86, which serve as primary elements, disposed on the top wall 91 and the bottom wall 92, respectively, of the drive section frame 81 and adapted to reciprocate the movable member 83; and the magnets 17, which serve as secondary elements, disposed on the upper and lower surfaces of the movable member 83 in opposition to the corresponding coil members 86.

The guide devices 85 includes the rails 113 and the blocks 114. The rails 113 are disposed on the right and left side surfaces of the movable member 83 in such a manner as to extend longitudinally. The blocks 114 are mounted on the drive section frame 81 in the following manner: the blocks 114 are disposed on the inner surfaces of the side walls 93 and 94 in such a manner as to correspond to the rails 113 and at a plurality of positions, at two positions in the present embodiment, along the longitudinal direction of the movable member 83. The blocks 114 hold the corresponding rails 113. Unillustrated balls roll on rolling surfaces formed between the rails 113 and the corresponding blocks 114. Notably, the blocks 114 are mounted on the side wall 93 via bolts b23 and on the side wall 94 via bolts b24.

Meanwhile, since operation of the linear motor device 49 involves supply of phase current to the coils 137, the coils 137 generate heat, which causes thermal expansion of the top and bottom walls 91 and 92. In order to absorb thermal expansion of the top and bottom walls 91 and 92, springs sp21, which serve as force application means, are disposed in such a manner as to surround the corresponding bolts b23 and to apply pre-load to the block 114, between at least one of the side walls 93 and 94 and the guide devices 85, in the present embodiment between the side wall 93 and the guide devices 85; i.e., between the side wall 93 and the blocks 114.

When the top wall 91 and the bottom wall 92 expand as a result from operation of the linear motor device 49, the side walls 93 and 94 are displaced outward. However, an impelling force of the springs sp21 presses the blocks 114 toward the movable member 83, whereby the blocks 114 sufficiently retain the corresponding rails 113. When the coils 134 stop generating heat as a result of the linear motor device 49 stopping running, the top wall 91 and the bottom wall 92 are cooled and contract, and thus the side walls 93 and 94 are displaced inward. However, while retaining the corresponding rails 113, the blocks 114 are pressed toward the side wall 93 against the impelling force of the springs sp21.

In order to adjust the position of the movable member 83 in the height direction, the support blocks 147 are disposed between the corresponding blocks 114 and the bottom wall 92, thereby supporting the corresponding blocks 114. Also, the adjustment blocks 148 are disposed between the corresponding blocks 114 and the top wall 91, and adjustment bolts b25 are disposed in such a manner as to extend through the corresponding adjustment blocks 148. By means of changing the size of the support blocks 147 in the height direction and changing the position of the bottom ends of the adjustment bolts b25 through rotation of the adjustment bolts b25, the position of the blocks 114 in the height direction can be adjusted so as to adjust the position of the movable member 83 in the height direction.

Meanwhile, for example, in the injection step, the plunger speed must be controlled on the basis of the position of the plunger 44, which serves as an injection member. In order to detect the position of the movable member 83, a position sensor 205, which serves as a position-detecting device, protrudes from and is disposed outside the drive section frame 81. Thus, a slit 204, which serves as a cutout portion, is formed in the side wall 93 of the drive section frame 81 at a height substantially equal to that of the movable member 83 and has a length equal to the sum of the stroke of the plunger 44 or the movable member 83 and a predetermined margin. A bracket 208 that assumes a shape resembling the letter "L" is mounted on the rail 113 while extending through the slit 204. The bracket 208 includes a protrusion portion p1 and a movable-element mount portion p2. The protrusion portion p1 is fixedly attached to the rail 113 and protrudes from the drive section frame 81 through the slit 204. The movable-element mount portion p2 extends perpendicularly from an end of the protrusion portion p1 along the drive section frame 81 and in parallel with the side wall 93.

The position sensor 205 includes a stationary element 206, which serves as a first detection element, and a movable element 207, which serves as a second detection element. The stationary element 206 is mounted on the outer surface of the side wall 93 of the drive section frame 81 and assumes a block-like shape. The movable element 207 is mounted on the bracket 208 at a predetermined position in such a manner as to correspond to the stationary element 206 and assumes a rod-like shape. The movable element 207 has a length corresponding to the stroke of the plunger 44 or the movable member 83 and extends along the drive section frame 81 and in parallel with the side wall 93. As the movable member 83 moves, the movable element 207 moves relatively to the stationary element 206. On the basis of the amount of movement of the movable element 207 relative to the stationary element 206, the position of the movable member 83 is detected, whereby the position of the plunger 44 is detected. In the present embodiment, the movable element 207 is attached to the movable member 83 via the bracket 208 and the rail 113. However, the movable element 207 may be attached to a protrusion that is formed on the movable member 83 and assumes a predetermined shape.

In the present embodiment, the position sensor 205 includes the stationary element 206 that assumes a block-like shape, and the movable element 207 that assumes a rod-like shape. However, the position sensor may include a movable element that assumes a block-like shape, and a stationary element that assumes a rod-like shape.

As described above, the position sensor 205 protrudes from and is disposed outside the drive section frame 81, thereby being free from the following problem: not only do the stationary element 206, the movable element 207, and other members expand and contract under the influence of heat generated from the linear motor device 49 in operation, but also lubricating oil applied or supplied to the aforementioned rolling surfaces adheres to the stationary element 206, the movable element 207, and other members. Therefore, the detection accuracy of the position sensor 205 can be enhanced.

Also, since the position sensor 205 protrudes from and is disposed outside the drive section frame 81, not only can maintenance and management of the position sensor 205 be facilitated, but also there is no need to provide a space within the drive section frame 81 for installation of the position sensor 205, so that the size of the linear motor device 49 can be reduced.

Next, a seventh embodiment of the present invention will be described. Structural features similar to those of the first embodiment are denoted by common reference numerals, and redundant description thereof is omitted.

FIG. 14 is a front view of an injection apparatus according to the seventh embodiment of the present invention.

The injection apparatus 43 includes a heating cylinder 347, which serves as a cylinder member; an injection nozzle 348 disposed at the front end (the left end in FIG. 14) of the heating cylinder 347; the plunger 44, which serves as an injection member, disposed reciprocatably (in a manner movable in the right-and-left direction in FIG. 14) in the heating cylinder 347; the linear motor device 49, which serves as injection drive means, for advancing and retreating the plunger 44; a screw 345, which serves as a metering member and as a plasticizing member, disposed in the heating cylinder 347 rotatably and reciprocatably while surrounding the plunger 44; and a motor 359, which serves as metering drive means, for rotating the screw 345. The injection-apparatus-moving mechanism 52 moves the injection apparatus 43 toward and away from an unillustrated stationary platen. When the injection apparatus 43 advances (moves leftward in FIG. 14), nozzle touch can be performed. The heating cylinder 347 includes a body member 361 and a seal member 362 disposed ahead (in FIG. 14 leftward) of the body member 361. A resin supply port 363 is formed in the body member 361 at an axially predetermined position. A hopper 364 is attached to the resin supply port 363. The screw 345 assumes a tubular shape so as to allow the plunger 44 to extend therethrough. A spiral flight is formed on the outer surface of the screw 345, and a groove is formed along the flight. The screw 345 includes an unillustrated changeover motor, which serves as injection-metering changeover drive means. The changeover motor, when operated, selectively moves the screw 345 to an injection position in which the front end of the screw 345 comes into contact with the inner surface of the seal member 362 or a metering position in which the front end of the screw 345 is located a predetermined distance away from the inner surface of the seal member 362. Notably, the plunger 44 and the screw 345 are disposed on the same axis in such a manner as to at least partially overlap each other in the axial direction.

The motor 359 is disposed between a front support plate 366 and a rear support plate 367 and includes an unillustrated stator and rotor. The front end of an output shaft of the motor 359 and the rear end (in FIG. 14 the right end) of the screw 345 are coupled via a rotation-coupling member 371. Rotation generated through operation of the motor 359 is transmitted to the rotation-coupling member 371.

The plunger 44 extends rearward (rightward in FIG. 14) through the screw 345 and the rotation-coupling member 371 and is connected to the output shaft 63 of the linear motor device 49 via the adapter 61, the load cell 62, and the movable plate 64. The load cell 62 serves as a pressure-detection device for detecting injection pressure, dwelling pressure, and back pressure to be generated by the linear motor device 49. The movable plate 64 serves as a movable support member. The screw 345, the plunger 44, the adapter 61, the load cell 62, the output shaft 63, and the movable portion 13 (FIG. 2) are disposed on the same axis.

In a metering step, the thus-configured injection apparatus operates in the following manner. Metering process means of an unillustrated control section performs a metering process and causes the screw 345 to move to the metering position through operation of the changeover motor. Subsequently, the metering process means causes the screw 345 to rotate through operation of the motor 359. Thus, resin which is supplied into the heating cylinder 347 from the hopper 364 through the resin supply port 363 is melted. The molten resin is caused to advance along the groove on the screw 345 and is then supplied into the screw 345 through a gap between the inner surface of the seal member 362 and the front end of the screw 345. As a result, the pressure of the resin causes the plunger 44 to retreat (move rightward in FIG. 14), whereby the resin is stored ahead of the plunger 44 in the heating cylinder 345. At this time, the metering process means receives back pressure detected by the load cell 62 and causes the linear motor device 49 to operate so as to control back pressure to be imposed on the plunger 44.

In an injection step, injection process means of the control section performs an injection process, thereby causing the screw 345 to move to the injection position through operation of the changeover motor and subsequently causing the plunger 44 to advance through operation of the linear motor device 49. As a result, the resin is injected into a cavity of an unillustrated mold apparatus from the injection nozzle 348. At this time, the injection process means performs speed control by means of the linear motor device 49 and detects, by means of the load cell 62, injection pressure which the plunger 44 has generated.

Upon completion of the injection step, a dwelling step starts. In the dwelling step, dwelling process means of the control section performs a dwelling process, thereby controlling dwelling pressure through operation of the linear motor device 49. At this time, the dwelling process means receives dwelling pressure detected by the load cell 62 and causes the linear motor device 49 to operate so as to control dwelling pressure which the plunger 44 generates.

In this case, since the plunger 44 and the screw 345 are disposed on the same axis, the size of the injection apparatus 43 in the height direction can be reduced. Since the plunger 44 and the screw 345 can be accommodated within the common heating cylinder 347, the number of heaters for heating the heating cylinder 347 can be reduced. Further, the number of component parts of the injection apparatus 43 can be reduced.

The present invention is not limited to the above-described embodiments. Numerous modifications and variations of the present invention are possible in light of the spirit of the present invention, and they are not excluded from the scope of the present invention.

### INDUSTRIAL APPLICABILITY

The present invention is applicable to a molding machine such as an injection-molding machine.

## Claims

1. An injection apparatus **characterized by** comprising:
(a) an injection member disposed reciprocatably in a cylinder member;
(b) a linear motor device for advancing the injection member when operated;
(c) a metering member disposed rotatably in the cylinder member; and
(d) metering drive means for rotating the metering member.

2. An injection apparatus as described in claim 1, wherein the injection member and the metering member are disposed on different axes.

3. An injection apparatus as described in claim 1, wherein the injection member and the metering member are disposed on the same axis.

4. An injection apparatus as described in any one of claims 1 to 3, wherein:
(a) a pressure-detection device for detecting pressure of a molding material present ahead of the injection member is disposed between the injection member and the linear motor device; and
(b) the injection member, the pressure-detection device, and the linear motor device are disposed on the same axis.

5. An injection apparatus as described in any one of claims 1 to 4, wherein the linear motor device comprises a movable member disposed reciprocatably, a drive section frame surrounding the movable member, coil members disposed on the drive section frame, magnets disposed on the movable member in opposition to the coil members, and a guide device for supporting the movable member.

6. An injection apparatus as described in claim 5, wherein:
(a) the coil members are disposed on a top wall and a bottom wall, respectively, of the drive section frame; and
(b) the magnets are disposed on an upper surface and a lower surface, respectively, of the movable member.

7. An injection apparatus as described in claim 5, wherein the guide device is disposed between a side surface of the movable member and the drive section frame.

8. An injection apparatus as described in claim 5, wherein the guide device is disposed between a lower surface of the movable member and the drive section frame.

9. An injection apparatus as described in claim 5, wherein the guide device is disposed between an upper surface of the movable member and the drive section frame.

10. An injection apparatus as described in claim 5, wherein the guide device comprises a rail disposed on the movable member in such a manner as to extend in a longitudinal direction of the movable member and a block mounted on the drive section frame and adapted to hold the rail.

11. An injection apparatus as described in claim 10, wherein force application means is disposed between the block and the drive section frame.

12. An injection apparatus as described in claim 5, wherein the drive section frame comprises a protruding member formed in such a manner as to protrude outward.

13. An injection apparatus as described in claim 12, wherein:
(a) a plurality of protruding members are provided; and
(b) an air flow path is formed between the protruding members.

14. An injection apparatus as described in claim 12, wherein:
(a) the drive section frame comprises a side wall; and
(b) a cooling fan for taking in air is disposed on the side wall.

15. An injection apparatus as described in claim 14, wherein the cooling fan is covered with an air-cooling cover.

16. An injection apparatus as described in claim 12, wherein the protruding member is disposed in such a manner as to extend perpendicularly to a moving direction of the movable member.

17. An injection apparatus as described in claim 5, further comprising a position-detecting device for detecting a position of the movable member.

18. An injection apparatus as described in claim 17, wherein the position-detecting device is disposed outside the drive section frame.

19. An injection apparatus as described in claim 17 or 18, wherein the position-detecting device comprises a first detection element fixedly attached to the drive section frame and a second detection element mounted on the movable member.

20. An injection apparatus as described in claim 19, wherein:
(a) a cutout portion is formed in the drive section frame; and
(b) the second detection element is mounted on a bracket which protrudes through the cutout portion and extends along the drive section frame.

21. An injection method **characterized by** comprising:
(a) rotating the metering member by metering drive means in order to feed a molding material, having been fed into a cylinder member, toward a front end of a metering member while melting the molding material, to thereby store the molding material in a space ahead of an injection member and retract the injection member by pressure of the molding material; and
(b) advancing the injection member through operation of a linear motor device in order to inject the stored molding material.

22. An injection method as described in claim 21, further comprising:
(a) detecting, by use of a pressure-detection device, pressure of the molding material, the pressure being transmitted via the injection member; and
(b) controlling back pressure on the basis of the pressure of the molding material.
